# FASCICULE DE BREVET EUROPEEN

(11) **EP 1 043 679 B1**
(45) Date de publication et mention de la délivrance du brevet: **12.09.2007**
(21) Numéro de dépôt: 00410033.5
(22) Date de dépôt: 06.04.2000
(51) Int. Cl.: G06K 7/00

(54) **Lecteur avec des moyens pour déterminer la distance entre ce lecteur et un transpondeur**
Leser mit Einrichtung zur Bestimmung des Abstandes zwischen dem Leser und einem Transponder
Reader having means for determining the distance between the reader and a transponder

(30) Priorité: 07.04.1999 FR 9904545; 07.04.1999 FR 9904548; 31.05.1999 FR 9907024
(43) Date de publication de la demande: 11.10.2000
(73) Titulaire: STMicroelectronics S.A., 92120 Montrouge (FR)
(72) Inventeur: Wuidart, Luc, 83910 Pourrières (FR); Bardouillet, Michel, 13790 Rousset (FR); Enguent, Jean-Pierre, 13119 Saint Savournin (FR)
(74) Mandataire: de Beaumont, Michel

(56) Documents cités:
- EP-A- 0 722 094
- EP-A- 0 857 981
- WO-A-98/20363
- DE-A- 19 546 928

## Description

La présente invention concerne des systèmes utilisant des transpondeurs électromagnétiques, c'est-à-dire des émetteurs-récepteurs (généralement mobiles) susceptibles d'être interrogés, sans contact et sans fil, par une unité (généralement fixe), dite borne de lecture et/ou d'écriture. L'invention concerne, plus particulièrement, des transpondeurs dépourvus d'alimentation autonome. Ces transpondeurs extraient l'alimentation nécessaire aux circuits électroniques qu'ils comportent du champ haute fréquence rayonné par une antenne de la borne de lecture et d'écriture. L'invention s'applique à de tels transpondeurs, qu'il s'agisse de transpondeurs à lecture seule, c'est-à-dire propres à fonctionner avec une borne se contentant de lire les données du transpondeur, ou à des transpondeurs à lecture-écriture qui contiennent des données qui peuvent être modifiées par la borne.

La présente invention concerne, plus particulièrement la détection, par un transpondeur, de la distance qui le sépare d'une borne et, plus particulièrement, de la position du transpondeur par rapport à un seuil de distance de la borne conditionnant le fonctionnement du système.

Les transpondeurs électromagnétiques sont basés sur l'emploi de circuits oscillants comprenant un enroulement formant antenne, côté transpondeur et côté borne de lecture-écriture. Ces circuits sont destinés à être couplés par champ magnétique proche lorsque le transpondeur entre dans le champ de la borne de lecture-écriture. La portée d'un système à transpondeur, c'est-à-dire la distance maximale de la borne à laquelle un transpondeur est activé (réveillé) dépend, notamment, de la taille de l'antenne du transpondeur, de la fréquence d'excitation de la bobine du circuit oscillant engendrant le champ magnétique, de l'intensité de cette excitation, et de la consommation en puissance du transpondeur.

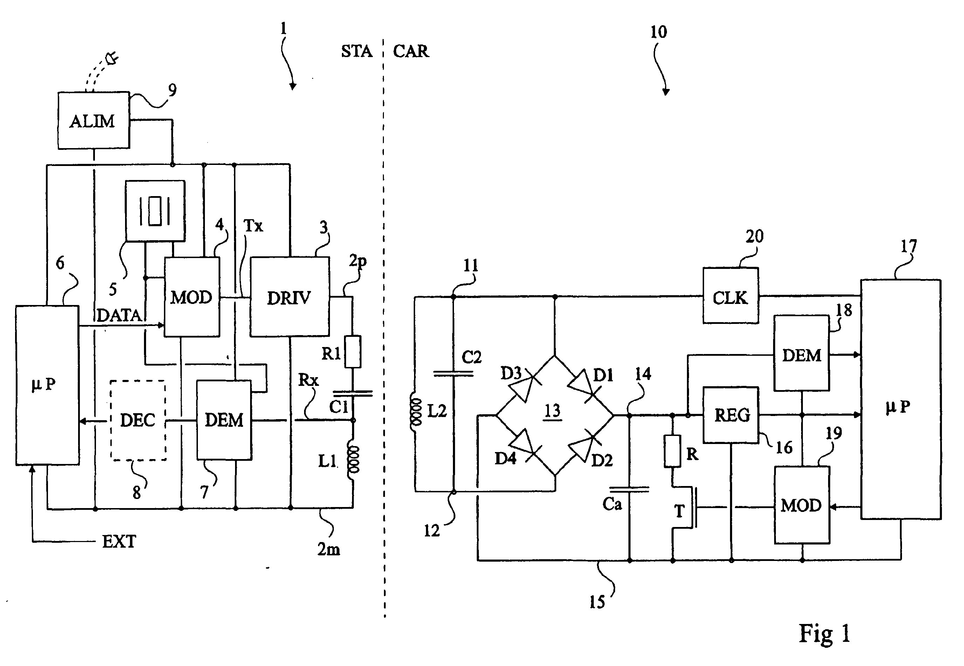

La figure 1 représente, de façon très schématique et fonctionnelle, un exemple classique de système d'échange de données entre une borne 1 de lecture-écriture (STA) et un transpondeur 10 (CAR).

Généralement, la borne 1 est essentiellement constituée d'un circuit oscillant formé d'une inductance L1, en série avec un condensateur C1 et une résistance R1, entre une borne 2p de sortie d'un amplificateur ou coupleur d'antenne 3 (DRIV) et une borne 2m à un potentiel de référence (généralement, la masse). L'amplificateur 3 reçoit un signal Tx de transmission haute fréquence, issu d'un modulateur 4 (MOD). Le modulateur reçoit une fréquence de référence, par exemple d'un oscillateur à quartz 5 et, si besoin, un signal DATA de données à transmettre. En l'absence de transmission de données de la borne 1 vers le transpondeur 10, le signal Tx sert uniquement de source d'énergie pour activer le transpondeur si celui-ci passe dans le champ. Les données à transmettre proviennent généralement d'un système numérique, par exemple, un microprocesseur 6 (µP).

Le point de connexion du condensateur C1 et de l'inductance L1 constitue, dans l'exemple représenté à la figure 1, une borne de prélèvement d'un signal Rx de données, reçues d'un transpondeur 10 à destination d'un démodulateur 7 (DEM). Une sortie du démodulateur communique (le cas échéant par l'intermédiaire d'un décodeur (DEC) 8) les données reçues du transpondeur 10 au microprocesseur 6 de la borne de lecture-écriture 1. Le démodulateur 7 reçoit, généralement de l'oscillateur 5, un signal d'horloge ou de référence pour une démodulation de phase. Le cas échéant, la démodulation est effectuée à partir d'un signal prélevé entre le condensateur C1 et la résistance R1, et non aux bornes de l'inductance L1. Le microprocesseur 6 communique (bus EXT) avec différents circuits d'entrée/sortie (clavier, écran, moyen de transmission vers un serveur, etc.) et/ou de traitement. Les circuits de la borne de lecture-écriture tirent l'énergie nécessaire à leur fonctionnement d'un circuit d'alimentation 9 (ALIM) raccordé, par exemple, au réseau de distribution électrique.

Côté transpondeur 10, une inductance L2, en parallèle avec un condensateur C2, forme un circuit oscillant parallèle (appelé circuit résonant en réception), destiné à capter le champ magnétique engendré par le circuit oscillant série L1C1 de la borne 1. Le circuit résonant (L2, C2) du transpondeur 10 est accordé sur la fréquence de résonance du circuit oscillant (L1, C1) de la borne 1.

Les bornes 11, 12 du circuit résonant L2C2 qui correspondent aux bornes du condensateur C2, sont reliées à deux bornes d'entrée alternative d'un pont redresseur 13 constitué, par exemple, de quatre diodes D1, D2, D3, D4. Dans la représentation de la figure 1, l'anode de la diode D1 est connectée à la borne 11, de même que la cathode de la diode D3. L'anode de la diode D2 et la cathode de la diode D4 sont connectées à la borne 12. Les cathodes des diodes D1 et D2 constituent une borne positive 14 de sortie redressée. Les anodes des diodes D3 et D4 constituent une borne de référence 15 de la tension redressée. Un condensateur Ca est connecté aux bornes de sortie redressée 14, 15 du pont 13 de façon à stocker de l'énergie et à lisser la tension redressée délivrée par le pont. On notera que le pont de diodes peut être remplacé par un montage de redressement mono-alternance.

Quand le transpondeur 10 se trouve dans le champ de la borne 1, une tension haute fréquence est engendrée aux bornes du circuit résonant L2C2. Cette tension, redressée par le pont 13 et lissée par le condensateur Ca, fournit une tension d'alimentation à des circuits électroniques du transpondeur par l'intermédiaire d'un régulateur de tension 16 (REG). Ces circuits comprennent généralement, essentiellement, un microprocesseur (*µ*P) 17 (associé à une mémoire non représentée), un démodulateur 18 (DEM) des signaux éventuellement reçus de la borne 1, et un modulateur 19 (MOD) pour transmettre des informations à la borne 1. Le transpondeur est généralement synchronisé au moyen d'une horloge (CLK) extraite, par un bloc 20, du signal haute fréquence récupéré aux bornes du condensateur C2, avant redressement. Le plus souvent, tous les circuits électroniques du transpondeur 10 sont intégrés dans une même puce.

Pour transmettre des données du transpondeur 10 vers la borne 1, le modulateur 19 commande un étage de modulation (rétromodulation) du circuit résonant L2C2. Cet étage de modulation est généralement constitué d'un interrupteur électronique (par exemple, un transistor T) et d'une résistance R, en série entre les bornes 14 et 15. Le transistor T est commandé à une fréquence (par exemple, 847,5 kHz) dite sous-porteuse, nettement inférieure (généralement avec un rapport d'au moins 10) à la fréquence du signal d'excitation du circuit oscillant de la borne 1 (par exemple, 13,56 MHz). Lorsque l'interrupteur T est fermé, le circuit oscillant du transpondeur est soumis à un amortissement supplémentaire par rapport à la charge constituée des circuits 16, 17, 18, 19 et 20, de sorte que le transpondeur prélève une quantité d'énergie plus importante du champ magnétique haute fréquence. Côté borne 1, l'amplificateur 3 maintient constante l'amplitude du signal d'excitation à haute fréquence. Par conséquent, la variation d'énergie du transpondeur se traduit par une variation d'amplitude et de phase du courant dans l'antenne L1. Cette variation est détectée par le démodulateur 7 de la borne 1 qui est soit un démodulateur de phase, soit un démodulateur d'amplitude. Par exemple, dans le cas d'une démodulation de phase, le démodulateur détecte, dans les demi-périodes de la sous-porteuse où l'interrupteur T du transpondeur est fermé, un léger déphasage (quelques degrés, voire moins d'un degré) de la porteuse du signal Rx par rapport au signal de référence. La sortie du démodulateur 7 (généralement la sortie d'un filtre passe-bande centré sur la fréquence de la sous-porteuse) restitue alors un signal image du signal de commande de l'interrupteur T qui peut être décodé (par le décodeur 8 ou directement par le microprocesseur 6) pour restituer les données binaires.

On notera que la borne ne transmet pas de données pendant qu'elle en reçoit d'un transpondeur, la transmission de données s'effectuant alternativement dans un sens puis dans l'autre (semi-duplex).

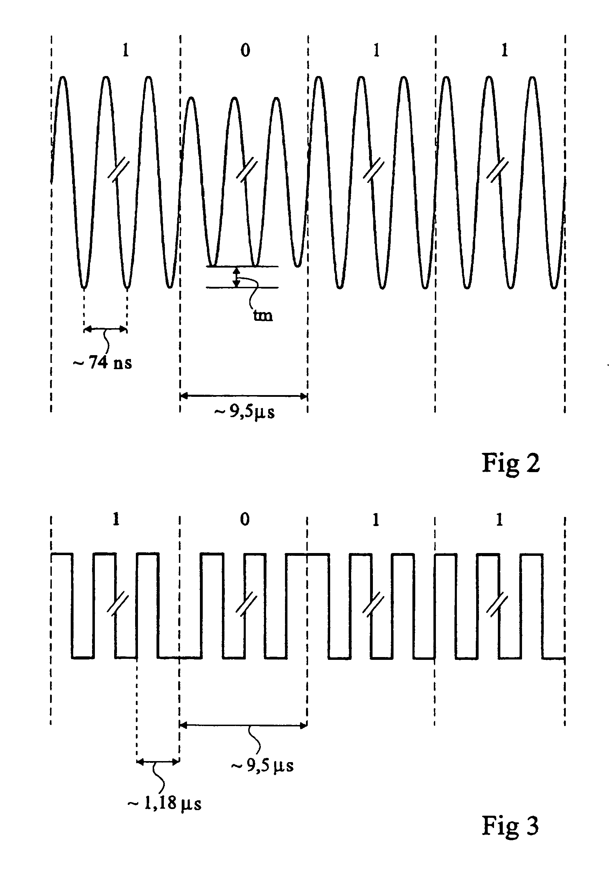

La figure 2 illustre un exemple classique de transmission de données de la borne 1 vers un transpondeur 10. Cette figure représente un exemple d'allure du signal d'excitation de l'antenne L1 pour une transmission d'un code 1011. La modulation couramment utilisée est une modulation d'amplitude avec un débit de 106 kbit/s (un bit est transmis en environ 9,5 *µ*s) nettement inférieur à la fréquence (par exemple, 13,56 MHz) de la porteuse provenant de l'oscillateur 5 (période d'environ 74 ns). La modulation d'amplitude s'effectue, soit en tout ou rien, soit avec un taux de modulation (défini comme étant la différence des amplitudes crêtes entre les deux états (1 et 0), divisée par la somme de ces amplitudes) inférieur à l'unité en raison du besoin d'alimentation du transpondeur 10. Dans l'exemple de la figure 2, la porteuse à 13,56 MHz est modulée, avec un débit de 106 kbit/s, en amplitude avec un taux de modulation tm de 10%.

La figure 3 illustre un exemple classique de transmission de données du transpondeur 10 vers la borne 1. Cette figure illustre un exemple d'allure du signal de commande du transistor T, fourni par le modulateur 19, pour une transmission d'un code 1011. Côté transpondeur, la rétromodulation est généralement de type résistif avec une porteuse (dite sous-porteuse) de, par exemple, 847,5 kHz (période d'environ 1,18 *µ*s). La rétromodulation est, par exemple, basée sur un codage de type BPSK (codage binaire par saut de phase) à un débit de l'ordre de 106 kbit/s nettement inférieur à la fréquence de la sous-porteuse.

On notera que, quel que soit le type de modulation ou de rétromodulation utilisé (par exemple, d'amplitude, de phase, de fréquence) et quel que soit le type de codage des données (NRZ, NRZI, Manchester, ASK, BPSK, etc.), celle-ci s'effectue de façon numérique, par saut entre deux niveaux binaires.

Les circuits oscillants de la borne et du transpondeur sont généralement accordés sur la fréquence de la porteuse, c'est-à-dire que leur fréquence de résonance est réglée sur la fréquence de 13,56 MHz. Cet accord a pour objet de maximiser la diffusion d'énergie vers le transpondeur, généralement, une carte de format type carte de crédit intégrant les différents constituants du transpondeur.

Dans certaines applications, on peut souhaiter connaître la distance qui sépare le transpondeur d'une borne, ou la position du transpondeur par rapport à un seuil de distance. Une telle détection de distance peut servir, par exemple, à basculer le système dans un mode de fonctionnement ou un autre selon que le transpondeur est proche (de l'ordre de 2 à 10 cm) ou très proche (moins d'environ 2 cm) du lecteur. La notion de proximité concerne la distance séparant les antennes L1 et L2 l'une de l'autre.

On connaît du document WO-A-97/34250 un dispositif d'échange d'informations sans contact avec une étiquette électronique, ce dispositif comportant des moyens de pré-traitement d'un signal représentatif de la distance entre l'étiquette et le dispositif, à partir du signal émis par l'étiquette. Ces moyens servent à déterminer et à signaler, au dispositif d'échange d'informations, que l'information provenant de l'étiquette est comprise dans une fenêtre de valeurs prédéterminées. Le dispositif décrit par ce document fait appel à une mesure de l'amplitude d'une modulation basse fréquence apportée par l'étiquette en réponse à une commande de lecture faite par le dispositif. Selon ce document, l'amplitude de cette modulation est représentative de la distance séparant l'étiquette du dispositif d'échange d'informations.

Un inconvénient de cette solution connue est que la détection nécessite une démodulation du signal rétromodulé émis par le transpondeur. En effet, la détection s'effectue à partir du niveau du signal démodulé, c'est-à-dire de la sous-porteuse. Outre le fait que la borne ne peut donc pas détecter la distance d'un transpondeur si ce dernier n'émet pas des informations, l'amplitude du signal démodulé n'est pas une fonction monotone de la distance. En particulier, la caractéristique de l'amplitude du signal en fonction de la distance présente généralement au moins un maximum dans une position de couplage dite critique. La position de couplage critique correspond à la distance à laquelle le couplage entre un transpondeur et la borne est optimisée par une amplitude de téléalimentation maximale reçue par le transpondeur lorsque les circuits oscillants de la borne et du transpondeur sont tous deux accordés sur la fréquence de la porteuse de téléalimentation. En d'autres termes, la position de couplage critique correspond à la distance où l'énergie de téléalimentation est maximale pour un facteur de couplage minimal, le facteur de couplage étant le rapport de la mutuelle inductance sur la racine carrée du produit des inductances des circuits oscillants.

Le document EP-0-722094 décrit une borne de lecture d'un transpondeur électromagnétique capable de détecter la distance qui la sépare du transpondeur en mesurant l'influence du transpondeur sur le circuit oscillant de la borne.

Le document WO98/20363 décrit un autre système de transmission de données entre un transpondeur et une borne pourvue d'une boucle de régulation de phase.

L'invention vise à proposer une solution qui permette une détection fiable de la distance, indépendamment de la position du transpondeur par rapport à la distance correspondant à la position de couplage critique. >>

Pour atteindre ces objets, la présente invention prévoit une borne de génération d'un champ électromagnétique propre à coopérer avec au moins un transpondeur lorsque ce dernier entre dans ce champ, cette borne comportant des moyens pour déterminer la distance séparant le transpondeur de la borne sans que ce transpondeur ait besoin d'émettre à destination de la borne.

La borne comprend un circuit oscillant propre à recevoir une tension d'excitation alternative haute fréquence, lesdits moyens mesurant une grandeur fonction de la charge constituée par le transpondeur sur le circuit oscillant de la borne, ladite borne comportant des moyens de régulation de la phase du signal dans le circuit oscillant par rapport à une valeur de référence.

Selon un mode de réalisation de la présente invention, lesdits moyens mesurent le courant dans le circuit oscillant ou la tension aux bornes d'un ou plusieurs de ses éléments.

Selon un mode de réalisation de la présente invention, lesdits moyens de mesure comprennent un convertisseur analogique-numérique du courant ou de la tension mesurée et un circuit numérique pour comparer la valeur mesurée par rapport à une table de correspondance mémorisée dans la borne.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1 à 3 décrites précédemment sont destinées à exposer l'état de la technique et le problème posé ;
la figure 4 représente, sous forme de blocs, un mode de réalisation d'une borne d'un système à transpondeur électromagnétique selon la présente invention ;
la figure 5 représente, partiellement et de façon très schématique, un premier mode de réalisation d'un détecteur de distance selon la présente invention ;
la figure 6 illustre, par une caractéristique tension-distance, le fonctionnement du détecteur de la figure 5 ;
la figure 7 représente, partiellement et de façon très schématique, un deuxième mode de réalisation d'un détecteur de distance, selon la présente invention ;
la figure 8 illustre, par une caractéristique tension-distance, le fonctionnement du détecteur de la figure 7 ;
la figure 9 représente, partiellement et de façon très schématique, un troisième mode de réalisation d'un détecteur de distance selon la présente invention ; et
la figure 10 illustre, par une caractéristique courant-distance, le fonctionnement du détecteur de la figure 9.

Les mêmes éléments ont été désignés par les mêmes références aux différentes figures. Pour des raisons de clarté, seuls les éléments qui sont nécessaires à la compréhension de l'invention ont été représentés aux figures et seront décrits par la suite. En particulier, la structure d'un transpondeur n'a pas été détaillée de même que la structure des éléments de traitement des données numériques côté borne de lecture.

Une caractéristique de la présente invention est d'utiliser le signal à la fréquence de la porteuse pour détecter la distance d'un transpondeur entré dans le champ de la borne. Le fait d'utiliser l'information directement sur la porteuse (par exemple, à 13,56 MHz) permet d'effectuer une détermination de la distance sans qu'il soit nécessaire que le transpondeur émette lui-même des informations. En effet, lorsqu'il entre dans le champ d'une borne, un transpondeur intervient sur la charge du circuit oscillant de cette borne. Cette variation de charge dépend, notamment, de la distance qui sépare le transpondeur de la borne.

Une première solution serait de mesurer l'amplitude du signal (par exemple, l'amplitude de la tension aux bornes du condensateur C1 figure 1) pour déterminer la distance à partir des variations de cette tension. Une telle mesure est toutefois en pratique inexploitable, notamment, car la plage de variation de tension en fonction de la distance dépend de l'accord du circuit oscillant, donc de la valeur de la capacité C1. Or, dans les circuits classiques, l'accord n'est jamais parfait.

En particulier, dans les bornes classiques, l'accord de la fréquence de résonance à la fréquence de la porteuse est effectué manuellement au moyen d'un condensateur variable, une fois la borne fabriquée. On a besoin d'ajuster l'accord, notamment, en raison des tolérances de fabrication des éléments capacitifs et inductifs, pour garantir le point de fonctionnement en phase choisi entre le signal délivré par l'oscillateur 5 et le signal reçu Rx. Un désaccord du circuit oscillant de la borne a plusieurs conséquences et, en particulier, celle de modifier l'amplitude du signal dans ce circuit oscillant et, par voie de conséquence, l'amplitude disponible du signal pour une mesure éventuelle.

Ainsi, une autre caractéristique de la présente invention est de prévoir une régulation de la phase du circuit oscillant de la borne par rapport à une valeur de référence. Selon l'invention, cette régulation de phase est effectuée au moyen d'une boucle dont le temps de réponse est choisi pour que la boucle soit suffisamment lente afin de ne pas gêner la rétromodulation provenant d'un transpondeur et soit suffisamment rapide devant la vitesse de passage d'un transpondeur dans le champ de la borne. On peut parler de régulation statique par rapport aux fréquences de modulation (par exemple, 13,56 MHz et 847,5 kHz).

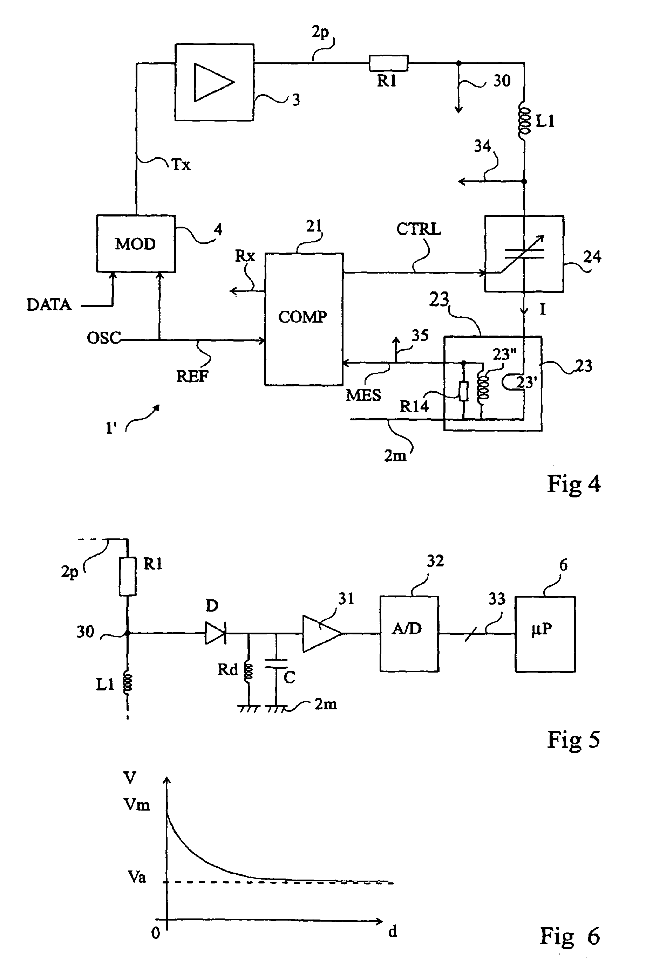

La figure 4 représente, sous forme de blocs, un mode de réalisation d'une borne 1' selon la présente invention, équipée d'une boucle de régulation de phase du circuit oscillant.

Comme précédemment, la borne 1' comporte un circuit oscillant formé d'une inductance ou antenne L1, en série avec un élément capacitif 24 et une résistance R1, entre une borne 2p de sortie d'un amplificateur ou coupleur d'antenne 3 et une borne 2m à un potentiel de référence (généralement, la masse). L'amplificateur 3 reçoit un signal Tx de transmission haute fréquence, issu d'un modulateur 4 (MOD) qui reçoit une fréquence de référence (signal OSC), par exemple, d'un oscillateur à quartz (non représenté). Le modulateur 4 reçoit, si besoin, un signal DATA de données à transmettre et, en l'absence de transmission de données depuis la borne, délivre la porteuse haute fréquence (par exemple, 13,56 MHz) propre à téléalimenter un transpondeur.

Une caractéristique de l'invention est que l'élément capacitif 24 est un élément à capacité variable et commandable par un signal CTRL.

Selon l'invention, on réalise une régulation de la phase du courant dans l'antenne L1 par rapport à un signal de référence REF. Cette régulation est une régulation du signal haute fréquence, c'est-à-dire du signal de la porteuse (par exemple, à 13,56 MHz) correspondant au signal Tx en l'absence de données à transmettre. Cette régulation est effectuée en faisant varier la capacité du circuit oscillant de la borne 1' de façon à maintenir le courant dans l'antenne en relation de phase constante avec le signal de référence. Le signal REF est à la fréquence de la porteuse et correspond, par exemple, au signal OSC fourni par l'oscillateur (5, figure 1) du modulateur.

Comme l'illustre la figure 4, l'élément capacitif 24 prévu en série avec la résistance R1 et l'inductance L1 est commandable au moyen du signal CTRL. Le signal CTRL est issu d'un circuit 21 (COMP) dont le rôle est de détecter l'écart de phase par rapport au signal de référence REF et de modifier en conséquence la capacité de l'élément 24.

La capacité variable 24 peut être faite de plusieurs façons. Généralement, cette capacité doit atteindre quelques centaines de picofarads et supporter, à ses bornes, une tension de plus de 100 volts.

Une première solution est d'utiliser une diode dont on utilise la capacité de la jonction polarisée en inverse en tant que capacité variable qui est fonction de cette polarisation. La diode est alors connectée, par son anode, côté borne 2m de référence et, par sa cathode, côté inductance L1.

Une deuxième solution est d'utiliser un transistor MOSFET monté en diode. Un tel composant a sensiblement la même caractéristique capacité-tension que celle d'une diode. L'avantage est que, pour une même tenue en tension d'avalanche, la surface d'intégration nécessaire est moindre que pour une diode.

La mesure de la phase dans le circuit oscillant est effectuée, par exemple, à partir d'une mesure du courant I dans ce circuit oscillant. On utilise, par exemple dans le mode de réalisation illustré par la figure 4, un circuit 23 constitué d'un transformateur d'intensité monté en série avec l'élément 24 et l'inductance L1. Un tel transformateur d'intensité est généralement constitué d'un enroulement primaire 23' entre l'élément 24 et la borne 2m de masse et d'un enroulement secondaire 23" dont une première borne est connectée directement à la masse 2m et dont l'autre borne délivre un signal MES fournissant le résultat de la mesure, une résistance R14 de conversion courant-tension étant connectée en parallèle avec l'enroulement secondaire 23".

Le résultat MES de la mesure est envoyé au comparateur de phase 21 qui compare alors la phase du courant mesuré par le bloc 23 au signal de référence REF, et asservi en conséquence l'élément capacitif 24 au moyen du signal CTRL.

Selon un mode de réalisation préféré, le comparateur 21 utilise le même démodulateur de phase (non représenté) que celui servant à démoduler le signal provenant du transpondeur et que reçoit éventuellement le circuit oscillant. Par conséquent, comme l'illustre la figure 4, le comparateur 21 délivre le signal Rx restituant une rétromodulation éventuelle reçue d'un transpondeur.

On notera que la boucle de régulation de phase doit être suffisamment lente pour ne pas gêner la modulation de phase à 847,5 kHz mais suffisamment rapide devant la vitesse de passage d'un transpondeur dans le champ de la borne, qui est généralement lié à la vitesse de déplacement d'une main. Par exemple, un temps de réponse de l'ordre d'une milliseconde convient, le temps de passage d'un transpondeur étant de plusieurs centaines de milli-secondes.

Un avantage de la présente invention est qu'en régulant la phase du circuit oscillant sur une valeur de référence, on s'affranchit à la fois des problèmes éventuels de tolérance de dimensionnement des composants du circuit oscillant, et de la dérive de ces composants en fonctionnement.

Le fait de réguler la phase du circuit oscillant sur une valeur de référence permet que la variation de distance d'un transpondeur entrant dans le champ de la borne ne se traduise que par une modification de la partie réelle de l'impédance de ce circuit oscillant. En effet, toutes les variations qui auraient tendance de modifier la partie imaginaire de cette impédance par la charge constituée par le transpondeur sont compensées par la boucle de régulation de phase.

On peut considérer que, quand un transpondeur entre dans le champ d'une borne de lecture-écriture, l'impédance du circuit oscillant de la borne est alors fonction non seulement des valeurs des composants R1, L1 et de la capacité de l'élément 24 (que l'on désignera par C1) mais également des valeurs respectives de l'inductance L2 et du condensateur C2 (figure 1) du transpondeur et de la résistance équivalente des circuits (microprocesseur, etc.) et du moyen de rétromodulation (par exemple, la résistance R, figure 1) ramenée en parallèle sur le condensateur C2 et l'inductance L2. On désignera par la suite par R2 cette résistance équivalente.

L'impédance apparente du circuit oscillant de la borne peut s'exprimer sous la forme : Z1 = R1a + jX1a, où R1a et X1a représentent respectivement les parties réelles et imaginaires de l'impédance apparente.

La partie imaginaire X1a peut s'exprimer sous la forme X1a = X1 - a²X2, où X1 = ωL1 - 1/ωC1, où X2 = ωL2 - 1/ωC2 , et où a² est un terme fonction de la pulsation ω, de la mutuelle inductance entre les deux circuits oscillants, de X2 et d'un terme R'2 en L2/R2C2.

La partie réelle R1a peut s'exprimer sous la forme R1a = R1 + R1 + a²R'2, où R1 représente la résistance parasite de l'inductance L1.

Par l'asservissement de la phase au moyen du système de régulation, on s'assure que, en fonctionnement statique (c'est-à-dire pour les fréquences inférieures à la fréquence de la sous-porteuse) la partie imaginaire X1a soit nulle, c'est-à-dire que X1 = a²X2.

De plus, dans une condition de fonctionnement donnée, caractérisé par la charge du transpondeur, c'est-à-dire une valeur donnée pour la résistance R2, on peut considérer que l'impédance ne dépend que de la mutuelle inductance. En effet, non seulement la pulsation ω ne varie pas mais les valeurs des résistances R1 et R1 de l'inductance L2 et du condensateur C2, soit tous les autres paramètres conditionnant le terme a² peuvent être considérés comme constants. Leurs variations éventuelles sont liées à d'éventuelles dérives technologiques et sont négligeables devant la variation liée à la résistance R2 ramenée au primaire (= R'2) et qui est conditionnée par la charge constituée par le transpondeur dans le champ. Il en découle que pour cette condition de fonctionnement donné, la seule variable qui subsiste dans le terme a² est la mutuelle m. Or, cette mutuelle inductance est fonction de la distance entre la borne et le transpondeur. Par conséquent, on peut déduire d'une variation de l'impédance et, plus particulièrement, de la partie réelle de cette impédance, une information fonction de la distance qui sépare le transpondeur de la borne.

On notera que, grâce à la présence de la boucle de phase, la variation de l'impédance est monotone avec la distance, et la plage de variation est toujours la même que le circuit soit accordé sur la fréquence de la porteuse ou soit désaccordé par rapport à cette distance.

L'extraction de l'information sur l'impédance des circuits oscillants peut être effectuée de plusieurs façons. Selon la présente invention, on préférera prélever cette information sous la forme d'une mesure de tension ou de courant comme cela sera décrit par la suite en relation avec trois modes de réalisation illustrés par les figures 5, 7 et 9. Ces modes de réalisation prévoient de prélever l'information, respectivement, aux noeuds 30, 34 et 35 de la figure 4.

La figure 5 représente un premier mode de réalisation d'un détecteur de distance selon l'invention. Selon ce mode de réalisation, on mesure la tension aux bornes du circuit oscillant, plus précisément, entre le point milieu 30 de l'association en série de la résistance R1 avec l'inductance L1, et la masse (2m). Le dispositif de mesure utilisé comprend, par exemple, un condensateur C de stockage de la tension mesurée au point 30. Une première borne du condensateur C est reliée, par l'intermédiaire d'une diode D, au point 30, tandis que sa deuxième borne est connectée à la masse 2m. Le rôle de la diode D est d'effectuer un redressement du signal prélevé sur la borne 30. Une résistance Rd est placée en parallèle sur le condensateur C pour assurer la décharge du condensateur quand la valeur mesurée diminue. La diode D, le condensateur C et la résistance Rd forment un détecteur d'enveloppe et d'autre moyens pour réaliser un tel détecteur peuvent être utilisés. La tension mémorisée dans le condensateur C est, le cas échéant, amplifiée par un amplificateur 31 avant d'être exploitée par un convertisseur analogique-numérique 32 (A/D) dont les sorties 33 sont envoyées au processeur 6 de la borne. L'amplificateur 31 dont l'entrée est connectée au point milieu de l'association en série de la diode D et du condensateur C et dont la sortie est envoyée sur le convertisseur 32 a simplement pour rôle d'amplifier si besoin l'amplitude des variations du signal de mesure, selon la plage de variation que l'on souhaite mesurer.

Comme l'illustre la figure 6 qui représente un exemple de caractéristique tension-distance selon le premier mode de réalisation de la figure 5, la tension V aux bornes du condensateur C diminue avec l'augmentation de la distance entre la borne et le transpondeur. La tension V est maximale (Vm) pour une distance nulle et décroît de façon non linéaire jusqu'à atteindre une asymptote (tension Va) qui correspond à la tension mesurée en l'absence de transpondeur dans le champ de la borne. En pratique, la tension Va est proche de zéro.

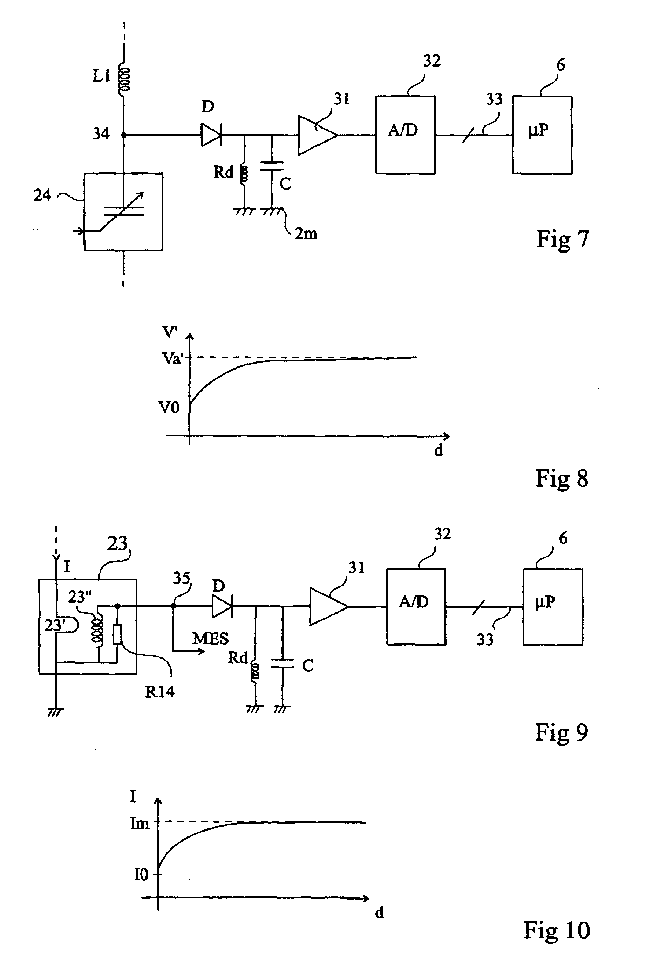

La figure 7 représente un deuxième mode de réalisation d'un détecteur de distance selon la présente invention. Selon ce mode de réalisation, on mesure la tension aux bornes de l'élément capacitif 24, plus précisément, entre le point milieu 34 de l'association en série de l'inductance L1 avec l'élément 24, et la masse 2m. Cette mesure est effectuée au moyen d'un dispositif similaire à celui illustré par la figure 5, c'est-à-dire comprenant une diode D entre le point 34 et une première borne d'un condensateur C dont la deuxième borne est connectée à la masse, une résistance Rd étant en parallèle avec le condensateur C. La tension aux bornes du condensateur C est mesurée, le cas échéant par l'intermédiaire d'un amplificateur 31, par un convertisseur analogique/numérique 32 dont les sorties 33 sont exploitées par le processeur 6.

La figure 8 illustre l'allure de la tension V' aux bornes du condensateur C en fonction de la distance entre la borne et le transpondeur. Cette tension V' a l'allure inverse de la tension V de la figure 6, c'est-à-dire qu'elle croît de façon non linéaire depuis une valeur minimale V0 jusqu'à une valeur asymptotique Va' correspondant à l'absence de transpondeur dans le champ de la borne.

La figure 9 représente un troisième mode de réalisation d'un détecteur de distance selon la présente invention. Selon ce mode de réalisation, on mesure le courant dans le circuit oscillant de la borne. Cette mesure s'effectue, de préférence, au moyen du dispositif de mesure de courant 23 utilisé par ailleurs pour la régulation de phase. Ainsi, comme l'illustre la figure 9, la mesure du courant est effectuée par l'intermédiaire du même transformateur d'intensité. La borne 35 de la résistance R14, qui délivre en figure 4 le signal MES de mesure à destination du comparateur de phase 21, est reliée à l'anode d'une diode D du dispositif de mesure selon l'invention. Comme dans les autres modes de réalisation, la cathode de la diode D est reliée à une première borne d'un condensateur C dont l'autre borne est à la masse, une résistance Rd étant en parallèle avec le condensateur C. La cathode de la diode D est également reliée, le cas échéant par l'intermédiaire d'un amplificateur 31, à une borne d'entrée d'un convertisseur analogique/numérique 32 dont les sorties 33 sont exploitées par le processeur 6.

La figure 10 illustre l'allure du courant I dans le circuit oscillant en fonction de la distance. Ce courant I croît depuis une valeur minimale I0 jusqu'à une asymptote Im correspondant à l'état du circuit oscillant en l'absence de transpondeur dans son champ.

On notera que quel que soit le mode de réalisation utilisé, la variation de distance se traduit par la modification de la partie réelle de l'impédance du circuit oscillant du primaire. Dans cette impédance et comme cela a été exposé précédemment, la contribution de la résistance R1 et de la résistance parasite de la self peuvent être considérées comme constantes en fonction de la distance. Plus précisément, leurs variations sont négligeables et sont essentiellement liées aux dispersions technologiques. Par conséquent, seule la mutuelle inductance et éventuellement la résistance R2 ramenée du transpondeur varient. Pour la résistance R2, on notera que, dans la plupart des cas, sa variation en cas de rétromodulation est négligeable. Si ce n'est pas le cas, il suffit de dimensionner le condensateur C pour que le détecteur d'enveloppe (diode D, condensateur C, résistance Rd) soit insensible à la fréquence de la sous-porteuse, ou de détecter la rétromodulation.

Parmi les modes de réalisation exposés ci-dessus, la mesure du courant constitue un mode de réalisation préféré car ce courant n'est jamais nul qu'il y ait ou non un transpondeur dans le champ de la borne.

On notera que, à titre de variante, on pourra combiner une mesure de tension à une mesure du courant. Par exemple, on utilisera le courant comme mesure principale et, si on atteint l'asymptote de valeur du courant dans laquelle l'exploitation de la mesure devient difficile, on utilise alors une mesure de tension pour valider ou invalider la présence d'un transpondeur dans le champ de la borne et, par conséquent la mesure de distance effectuée.

Un avantage de la présente invention est qu'il n'est pas nécessaire que le transpondeur émette pour que l'on puisse déterminer la distance qui le sépare de la borne. En effet, l'invention détermine la distance uniquement à partir de la charge constituée par le transpondeur sur le circuit oscillant et sans qu'il soit nécessaire de démoduler un message de celui-ci.

On notera que la transformation de l'information de tension ou de courant en valeur à partir d'une table de correspondance mémorisée dans la borne est à la portée de l'homme du métier à partir des indications fonctionnelles données ci-dessus. Dans l'établissement de la table, on tiendra bien entendu compte des amplitudes de tension et de la plage de variation de la tension ou du courant en fonction de la distance.

Un autre avantage de la présente invention est que la mesure de distance s'effectue sur le seul signal permanent du système de transmission, à savoir, la porteuse de téléalimentation (par exemple à 13,56 MHz).

Le choix de l'information utilisé pour la mesure dépend de l'application et, en particulier du dimensionnement des différents constituants des circuits oscillants qui conditionnent l'amplitude de variation de tension ou de courant en fonction de la distance. De plus, la réalisation pratique des circuits de mesure et de régulation de phase est à la portée de l'homme du métier à partir des indications fonctionnelles données ci-dessus.

Parmi les applications de la présente invention, on signalera plus particulièrement les lecteurs (par exemple, les bornes ou portiques de contrôle d'accès, les distributeurs automatiques de produits, les terminaux d'ordinateurs, les terminaux téléphoniques, les téléviseurs ou décodeurs satellite, etc.) de cartes à puces sans contact (par exemple, les cartes d'identification pour contrôle d'accès, les cartes porte-monnaie électronique, les cartes de stockage d'information sur le possesseur de la carte, les cartes de fidélité de consommateurs, les cartes de télévisions à péage, etc.).

## Revendications

1. Borne (1') de génération d'un champ électromagnétique propre à coopérer avec au moins un transpondeur lorsque ce dernier entre dans ce champ et comprenant
- un circuit oscillant (R1, L1, 24) propre à recevoir une tension d'excitation alternative haute fréquence,
- des moyens de mesure d'une grandeur fonction de la charge constituée par le transpondeur sur le circuit oscillant de la borne pour déterminer la distance séparant le transpondeur de la borne,
**caractérisée en ce que**
- elle comporte des moyens (21, 24, 23) de régulation de la phase du signal dans le circuit oscillant par rapport à une valeur de référence,
- la mesure de distance s'effectue sans que ce transpondeur ait besoin d'émettre à destination de la borne.

2. Borne selon la revendication 1, **caractérisée en ce que** lesdits moyens mesurent le courant dans le circuit oscillant (R1, L1, 24) ou la tension aux bornes d'un ou plusieurs de ses éléments.

3. Borne selon l'une quelconque des revendications 1 et 2, **caractérisée en ce que** lesdits moyens de mesure comprennent un convertisseur analogique/numérique (32) du courant ou de la tension mesurée et un circuit numérique (6) pour comparer la valeur mesurée par rapport à une table de correspondance mémorisée dans la borne.

## Claims

1. A terminal (1') for generating an electromagnetic field adapted to cooperate with at least one transponder when said transponder enters in the field, comprising:
- an oscillating circuit (R1, L1, 24) adapted to receive a high frequency A.C. drive voltage,
- means for measuring a variable depending on the load formed by the transponder on the terminal's oscillating circuit for determining the distance separating the transponder from the terminal,
**characterized in that**:
it comprises means (21, 24, 23) for regulating the phase of the signal in the oscillating circuit with respect to a reference value,
the distance measurement is made without requiring any transmission from the transponder to the terminal.

2. The terminal of claim 1, **characterized in that** said means measure the current in the oscillating circuit (R1, L1, 24) or the voltage across one or several of its elements.

3. The terminal of claim 1 or 2, **characterized in that** said measurement means include an analog-to-digital converter (32) of the measured current or voltage and a digital circuit (6) for comparing the measured value with a correspondence table stored in the terminal.

## Patentansprüche

1. Ein Endgerät (1') zum Erzeugen eines elektromagnetischen Feldes, das in der Lage ist, mit wenigstens einem Transponder zusammenzuarbeiten, wenn der Transponder in das Feld eintritt, wobei das Endgerät Folgendes aufweist:
- Einen Schwingkreis (R1, L1, 24), der in der Lage ist, eine Hochfrequenzwechselantriebsspannung zu empfangen;
- Mittel zum Messen einer Variablen, die von der Last abhängt, die durch den Transponder an dem Schwingkreis des Endgerätes gebildet wird, zur Bestimmung des Abstandes zwischen dem Transponder und dem Endgerät;
**dadurch gekennzeichnet, dass**
das Endgerät Mittel (21, 24, 23) aufweist zum Regulieren der Phase des Signals in dem Schwingkreis bezüglich eines Referenzwertes :
wobei die Distanzmessung durchgeführt wird ohne das Erfordernis irgendeiner Übertragung von dem Transponder zu dem Endgerät.

2. Endgerät nach Anspruch 1, **dadurch gekennzeichnet, dass** die Mittel den Strom in dem Schwingkreis (R1, L1, 24) oder die Spannung über eines oder mehrere seiner Elemente messen.

3. Endgerät nach Anspruch 1 oder 2, **dadurch gekennzeichnet, dass** die Messmittel einen Analog-zu-Digital-Wandler (32) für den gemessenen Strom oder die Spannung umfassen und eine digitale Schaltung (6) zum Vergleichen des gemessenen Werts mit einer entsprechenden Tabelle, die in dem Endgerät gespeichert ist.
